# EUROPEAN PATENT SPECIFICATION

(11) **EP 4 212 417 B1**
(45) Date of publication and mention of the grant of the patent: **31.07.2024**
(21) Application number: 22212508.0
(22) Date of filing: 09.12.2022
(51) Int. Cl.: B62J 6/027, B62K 21/12, B62J 17/02, B62J 11/13

(54) **STRADDLED VEHICLE**
GRÄTSCHSITZFAHRZEUG
VÉHICULE À SELLE

(30) Priority: 14.01.2022 JP 2022004677
(43) Date of publication of application: 19.07.2023
(73) Proprietor: Yamaha Hatsudoki Kabushiki Kaisha, Iwata-shi, Shizuoka 438-8501 (JP)
(72) Inventor: Shimizu, Kenta, Iwata-shi, Shizuoka (JP); Fujiwara, Yu, Iwata-shi, Shizuoka (JP); Nagaoka, Masaki, Iwata-shi, Shizuoka (JP)
(74) Representative: Grünecker Patent- und Rechtsanwälte PartG mbB

(56) References cited:
- JP-A- 2010 201 952
- JP-A- H05 330 466
- JP-A- S63 188 584

## Description

The present invention relates to a straddled vehicle according to the preamble of independent claim 1. Such a straddled vehicle can be taken from the prior art document JP H05 330466 A.

Straddled vehicles are provided with a headlight. Conventionally, the headlight has been screwed to a front portion of a handle cover and the weight of the headlight has been supported by the handle cover (see JP 5713849 B).

However, in recent years, there has been a trend of increase in size of the headlight such that a sufficient amount of light can be emitted from the headlight. Besides, there has been also a trend of increase in weight of the headlight due to using an LED (Light Emitting Diode) for the headlight. Such a large-sized headlight is a heavy object; hence, when the headlight is supported by the handle cover, the handle cover is required to exert a stiffness enough to support the headlight, whereby increase in size of the handle cover is inevitable.

Incidentally, vibrations are transmitted from the road surface to tires and are then transmitted to a frame assembly (a frame, a front fork, and a head pipe). Furthermore, the vibrations are transmitted to a handle, whereby the handle wobbles. Due to the wobbling of the handle, the vibrations are finally transmitted to the handle cover supported by the handle. Because of this, there has occurred a phenomenon that a handle unit wobbles due to vibrations transmitted to the headlight supported by the handle cover. To deal with this, it has been required for members disposed in the surroundings of the headlight to have high strength for supporting the headlight.

It is an object of the present invention to provide a straddled vehicle that can solve a vibration problem by exerting a stiffness enough to support a headlight, and simultaneously, can use a compact handle cover compatible with a large-sized headlight. According to the present invention said object is solved by a straddled vehicle having the features of independent claim 1. Preferred embodiments are laid down in the dependent claims.

A straddled vehicle according to an aspect of the present teaching includes a handle, a headlight, a handle cover, a first support section, and a second support section. The headlight is disposed in front of the handle. The handle cover covers the handle and the headlight from front and behind. The first support section is fixed to the handle and supports the headlight. The second support section is fixed to the handle and supports the headlight on a lower side than the first support section.

In the straddled vehicle according to the present aspect, the headlight is supported in up and down positions by the first and second support sections fixed to the handle. Accordingly, vibrations transferred from a frame assembly can be inhibited. Besides, a stiffness enough to support the headlight can be exerted by supporting the headlight in the positions divided up and down; hence, a type of headlight configured as a large-sized heavy object can be used as the headlight. The stiffness enough to support the headlight can be exerted by the first and second support sections fixed to the handle; hence, increase in size of the handle cover is not required to support the headlight, and therefore, the handle cover can be made compact. Besides, the headlight is supported by the up and down positions; hence, vibrations can be effectively inhibited at lesser support sites.

As described above, wobbling of the headlight can be inhibited and a strength enough to support the headlight can be obtained; hence, the headlight can be enhanced in design flexibility. Besides, such a heavy headlight as an LED light can be used as well.

The first support section may include a first support portion and a second support portion. The first support portion may support the headlight. The second support portion may support the headlight, while being disposed in alignment with the first support portion in a width direction. In this case, the first support section, which is the upper one of the support sections, supports the headlight in two positions in the width direction; hence, wobbling in the right-and-left direction can be inhibited as well.

The headlight may include a first protrusion and a second protrusion that protrude toward the handle. The first support portion may include a first through hole and a first elastic body that has a tubular shape, is disposed in the first through hole, and causes the first protrusion to be inserted thereto. The second support portion may include a second through hole and a second elastic body that has a tubular shape, is disposed in the second through hole, and causes the second protrusion to be inserted thereto. In this case, the headlight is supported through the tubular elastic bodies, whereby vibrations attributed to wobbling of the headlight can be attenuated.

The first support section may support the headlight in a position located identical to or on an upper side than a center of gravity of the headlight in an up-and-down direction. The second support section may support the headlight in a position located on a lower side than the center of gravity of the headlight. By supporting the headlight in the positions described above, it is made possible to provide a structure intended to easily achieve an advantageous effect of inhibiting vibrations of the headlight.

The second support section may support the headlight from below. In this case, by supporting the headlight from below, vibrations of the headlight can be effectively inhibited.

The handle may include an up-and-down pipe portion extending in an up-and-down direction and a width pipe portion extending from a top of the up-and-down pipe portion in a width direction. The first support section may extend from the width pipe portion toward the headlight. The second support section may extend from the up-and-down pipe portion toward the headlight. In this case, the headlight can be supported by the first and second support sections extending from the handle.

The straddled vehiclemapfurther includes a meter unit disposed behind the headlight. The first support portion and the second support portion may support the headlight in positions located bilaterally outside the meter unit in the width direction. In this case, the headlight is supported in the positions located bilaterally outside the meter unit; hence, the headlight and the meter unit can be approached to each other. Because of this, even in use of a headlight, a meter unit, and so forth that are greater in size than conventional ones, those components can be compactly set in place.

The straddled vehicle further includes a meter unit disposed behind the headlight. The first support section supports the meter unit. In this case, the meter unit is supported by the first support section fixed to the handle; hence, a strength enough to support the meter unit can be obtained. Besides, the first support section supporting the headlight functions to support the meter unit as well; hence, reduction in number of components can be achieved, whereby compactness in structure can be achieved.

The first support section may support the meter unit in a position proximal to a center of gravity of the meter unit. In this case, the weight of the meter unit can be mainly supported by the handle; hence, the weight of the meter unit, acting on the handle cover, can be reduced. Besides, a stress of the handle cover can be lessened by using the meter unit as a load-bearing member.

The meter unit may be longer in a back-and-forth direction than in a width direction. When such a vertically elongated type of meter unit is used as the meter unit, the meter unit greatly wobbles up and down. However, the meter unit is supported by the first support section fixed to the handle; hence, wobbling of the meter unit can be inhibited.

The first support section may include a first support portion, a second support portion, and a third support portion. The first support portion may support the headlight. The second support portion may support the headlight, while being disposed in alignment with the first support portion in a width direction. The third support portion may support the meter unit, while being disposed between the first support portion and the second support portion in the width direction. In this case, the meter unit can be supported by the third support portion of the first support section.

The straddled vehicle may further include a combined bake wire and a holding member. The combined brake wire may connect a front brake and a rear brake therethrough. The holding member may hold the combined brake wire, while being disposed on the first support section. In this case, the combined brake wire can be inhibited from contacting with other components in traveling.

Overall, according to the present teaching, the headlight can be supported by the first and second support sections fixed to the handle in the positions divided up and down; hence, vibrations transferred from a frame assembly can be inhibited. A stiffness enough to support the headlight can be exerted by supporting the headlight in the positions divided up and down; hence, a type of headlight, configured as a large-sized heavy object, can be used as the headlight. The stiffness enough to support the headlight can be exerted by the first and second support sections fixed to the handle; hence, increase in size of the handle cover is not required to support the headlight, and therefore, the handle cover can be made compact. Besides, the headlight is supported in the up-and-down positions; hence, vibrations can be effectively inhibited in lesser support sites.

### BRIEF DESCRIPTION OF THE DRAWINGS

FIG. 1 is a side view of a straddled vehicle according to a preferred embodiment.
FIG. 2 is a front view of the straddled vehicle.
FIG. 3 is a perspective view of a headlight and the vicinity thereof in the straddled vehicle.
FIG. 4 is a view of a configuration shown in FIG. 3 and shows a condition that a handle cover is detached therefrom.
FIG. 5 is a side view of the configuration shown in FIG. 3 and shows the condition that the handle cover is detached therefrom.
FIG. 6 is a plan view of the configuration shown in FIG. 3 and shows the condition that the handle cover is detached therefrom.
FIG. 7 is a perspective view of a configuration of a handle member, a first support section, and a second support section as seen from a lower front side.
FIG. 8 is a perspective view of the configuration of the handle member, the first support section, and the second support section as seen from an upper rear side.
FIG. 9 is a front view of the configuration of the handle member, the first support section, and the second support section.
FIG. 10 is a perspective view of a configuration of a front cover, the headlight, the handle member, the first support section, and the second support section as seen from a rear side.
FIG. 11 is a perspective view of the configuration shown in FIG. 10 as seen from the rear side and shows a condition that the front cover is detached therefrom.
FIG. 12 is an exploded view of the configuration shown in FIG. 11 and shows a condition that the headlight is detached from the first and second support sections.
FIG. 13 is a side view of the headlight for explaining a relation between a center-of-gravity position in the headlight and a position in which the headlight is supported.
FIG. 14 is a perspective view of a configuration of a rear cover, a meter unit, the handle member, the first support section, and the second support section as seen from a front side.
FIG. 15 is a perspective view of the configuration shown in FIG. 14 as seen from the front side and shows a condition that the rear cover is detached therefrom.
FIG. 16 is an exploded view of the configuration shown in FIG. 15 and shows a condition that the meter unit is detached from the first support section.
FIG. 17 is a side view of the meter unit for explaining a center-of-gravity position in the meter unit and a position in which the meter unit is supported.

### DETAILED DESCRIPTION OF EMBODIMENTS

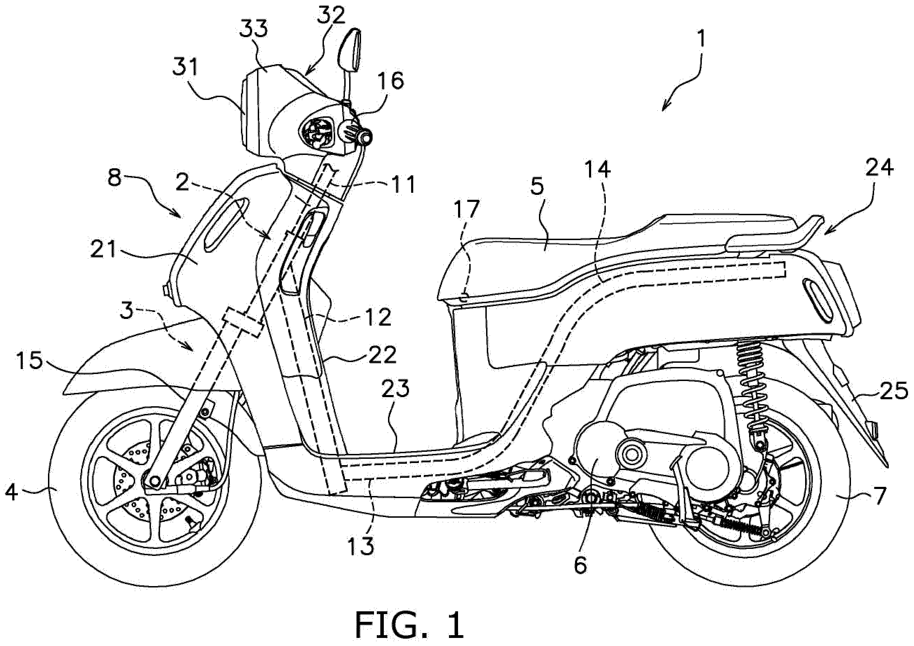

A straddled vehicle 1 according to a preferred embodiment will be hereinafter explained with reference to drawings. FIG. 1 is a side view of the straddled vehicle 1. In the present preferred embodiment, the straddled vehicle 1 is a scooter type vehicle. As shown in FIG. 1, the straddled vehicle 1 includes a vehicle body frame 2, a steering device 3, a front wheel 4, a seat 5, a power unit 6, a rear wheel 7, and a vehicle body cover 8. It should be noted that in the following explanation, front, rear, right, and left directions are defined as indicating front, rear, right, and left directions seen from a driver seated on the seat 5. Besides, a right-and-left direction of the vehicle and a width direction of the vehicle are synonymous with each other and a rear-and-front direction of the vehicle and a back-and-forth direction of the vehicle are synonymous with each other. The right-and-left direction of the vehicle is perpendicular to rear-and-front direction of the vehicle and perpendicular to an up-and-down direction of the vehicle.

The vehicle body frame 2 includes a head pipe 11, a down frame 12, a lower frame 13, and seat frame 14. The head pipe 11 is disposed in the middle of the straddled vehicle 1 in the right-and-left direction. The head pipe 11 extends forward and downward. The down frame 12 extends downward from the head pipe 11. The lower frame 13 extends rearward from a lower portion of the down frame 12. The seat frame 14 extends rearward and upward from a rear portion of the lower frame 13.

The steering device 3 is supported by the head pipe 11 so as to be turnable. The steering device 3 supports the front wheel 4 such that the front wheel 4 is rotatable. The steering device 3 includes a front fork 15 and a handle 16. The front fork 15 is supported by the head pipe 11 so as to be turnable. The front wheel 4 is supported by the front fork 15 so as to be rotatable. The handle 16 is connected to the front fork 15.

The seat 5 is disposed behind the head pipe 11. The seat 5 is disposed above the seat frame 14. The seat 5 is supported by the seat frame 14 through a stay not shown in the drawings. The seat 5 is supported at a front portion thereof by a shaft 17 extending in the width direction so as to be pivotable. When the seat 5 is pivoted about the shaft 17, a rear portion of the seat 5 is circularly moved in an up-and-down direction. The power unit 6 is disposed below the seat 5. The power unit 6 includes an engine. Alternatively, the power unit 6 may include an electric motor. The rear wheel 7 is supported by the power unit 6 so as to be rotatable.

The vehicle body cover 8 includes a front cover 21, a leg shield 22, a foot board 23, and a rear cover 24. The front cover 21 and the leg shield 22 are disposed in a front portion of the straddled vehicle 1. The front cover 21 is disposed in front of the head pipe 11 and the down frame 12. The leg shield 22 is disposed behind the head pipe 11 and the down frame 12.

The foot board 23 is disposed between the leg shield 22 and the rear cover 24. The foot board 23 extends rearward from the lower end of the leg shield 22. The foot board 23 is disposed below and in front of the seat 5. The foot board 23 has a flat shape in the right-and-left direction. However, the foot board 23 may include a center tunnel portion protruding upward from the middle thereof located in the right-and-left direction.

The rear cover 24 is disposed in a rear portion of the straddled vehicle 1. The rear cover 24 is disposed below the seat 5. The rear cover 24 is disposed above the engine and the rear wheel 7. A rear fender 25 is attached to the rear cover 24. The rear fender 25 is disposed above and behind the rear wheel 7.

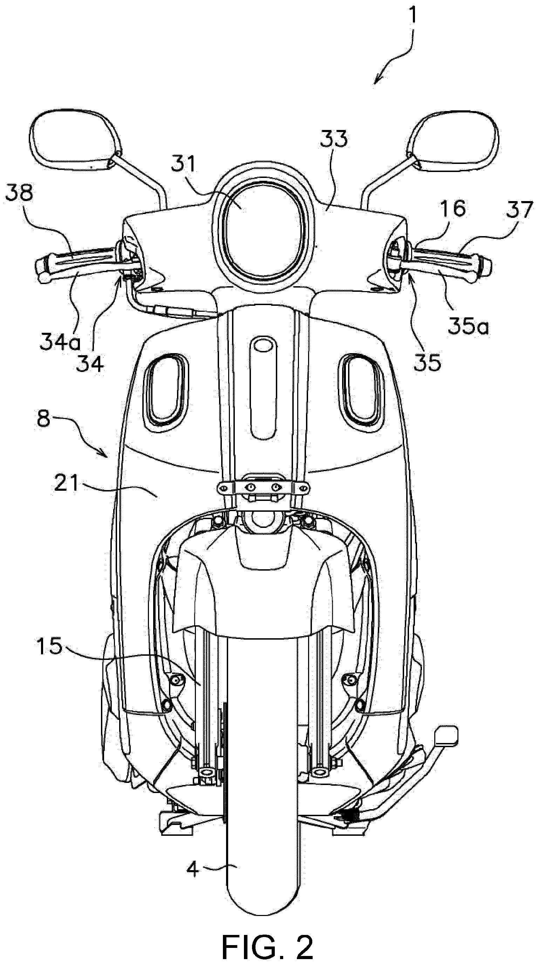

FIG. 2 is a front view of the straddled vehicle 1. As shown in FIGS. 1 and 2, the straddled vehicle 1 includes a headlight 31, a meter unit 32, a handle cover 33, a right brake 34 (exemplary front brake), and a left brake 35 (exemplary rear brake).

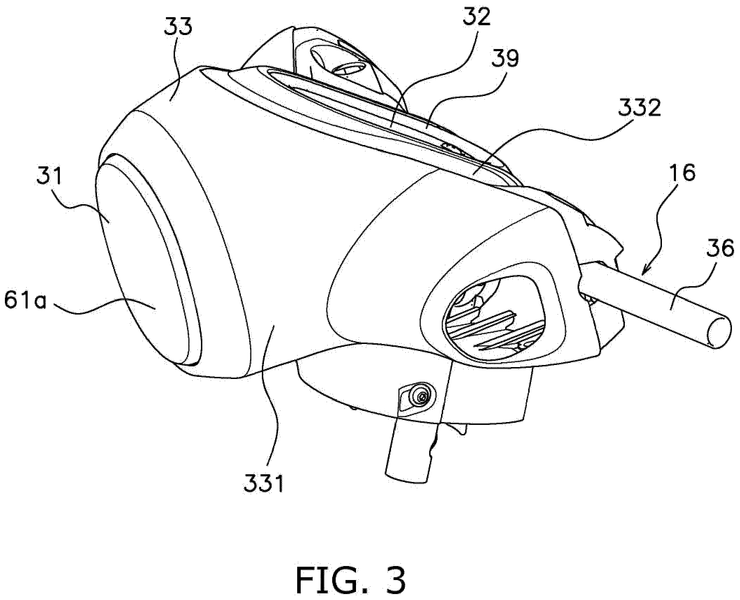

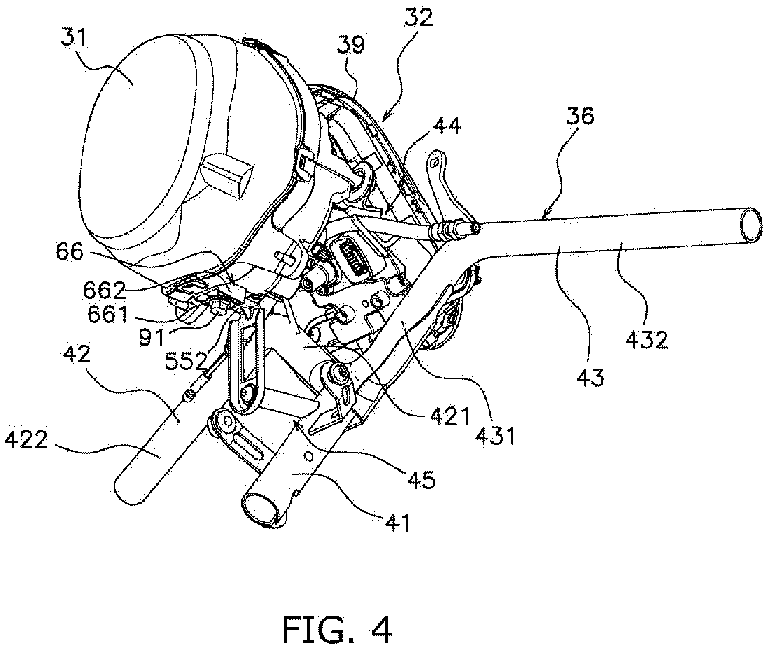

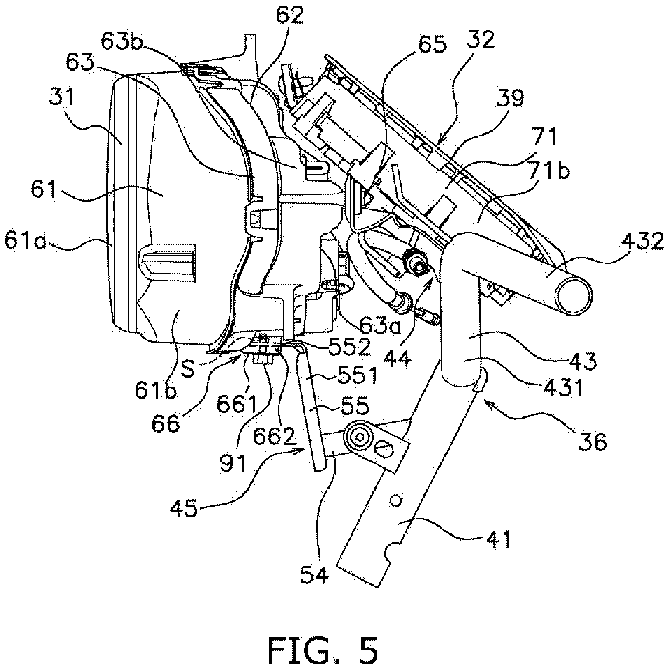

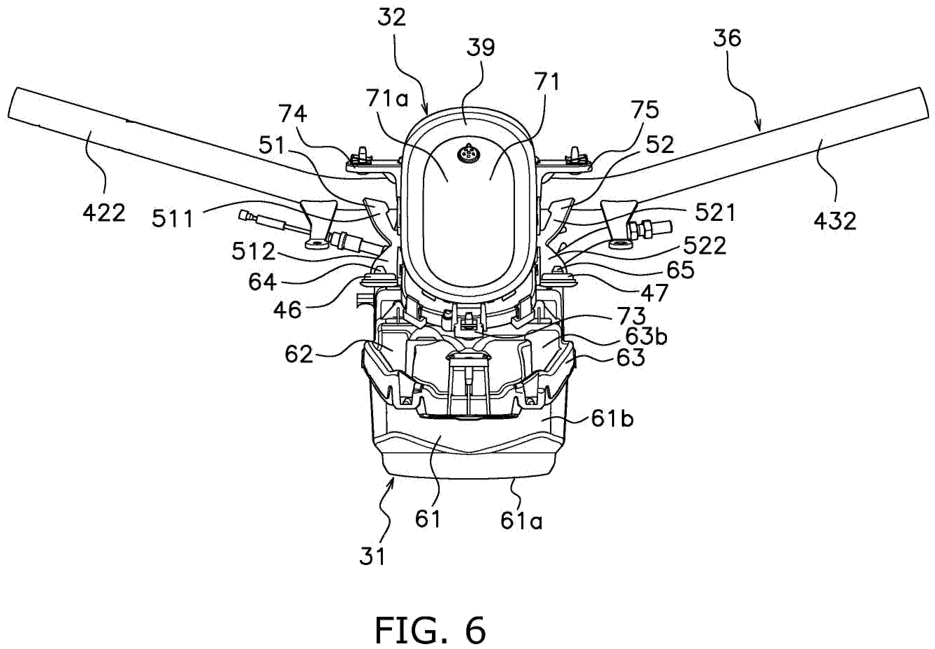

FIG. 3 is a perspective view of the handle cover 33 and the vicinity thereof. FIG. 4 is a perspective view of the configuration shown in FIG. 3 as seen from below and shows a condition that the handle cover 33 is detached therefrom. FIG. 5 is a side view of the configuration shown in FIG. 4. FIG. 6 is a top view of the configuration shown in FIG. 4.

As shown in FIGS. 5 and 6, the headlight 31 is disposed in front of the handle 16. An LED light can be used as the headlight 31. The meter unit 32 is disposed behind the headlight 31.

The handle cover 33 covers the headlight 31 and the meter unit 32 from front and behind. The handle cover 33 is included in the vehicle body cover 8. As shown in FIG. 3, the handle cover 33 includes a front cover 331 and a rear cover 332. The front cover 331 covers the surroundings of the headlight 31. The front cover 331 covers the front side of the handle 16 except for both end portions of the handle 16. The rear cover 332 is disposed in the surroundings of the meter unit 32. A meter cover 39 is disposed as a decorative cover so as to hide a gap between the rear cover 332 and the meter unit 32. The rear cover 332 covers the rear side of the handle 16 except for both end portions of the handle 16.

As shown in FIG. 2, the right brake 34 is disposed in front of the handle 16. The right brake 34 is disposed on, for instance, a right lateral surface side. The right brake 34 includes a brake lever 34a. The left brake 35 is disposed on, for instance, a left lateral surface side. The left brake 35 includes a brake lever 35a. As shown in FIGS. 2 and 4, the handle 16 includes a handle member 36, a left grip 37, and a right grip 38. As shown in FIG. 4, the handle member 36 includes an up-and-down pipe portion 41, a right-side pipe portion 42, and a left-side pipe portion 43. The up-and-down pipe portion 41 is disposed in the up-and-down direction. The right-side pipe portion 42 extends from the upper end of the up-and-down pipe portion 41 to the right lateral surface side. The right-side pipe portion 42 includes an inner portion 421 and an outer portion 422. The inner portion 421 extends rightward and upward from the upper end of the up-and-down pipe portion 41, whereas the outer portion 422 extends rightward from the upper end of the inner portion 421. The left-side pipe portion 43 extends from the upper end of the up-and-down pipe portion 41 to the left lateral surface side. The left-side pipe portion 43 includes an inner portion 431 and an outer portion 432. The inner portion 431 extends leftward and upward from the upper end of the up-and-down pipe portion 41, whereas the outer portion 432 extends leftward from the upper end of the inner portion 431.

As shown in FIG. 4, the right grip 38 is disposed on a right end portion of the outer portion 422 of the right-side pipe portion 42. The left grip 37 described above is disposed on a left end portion (exposed from the handle cover 33 in FIG. 3) of the outer portion 432 of the left-side pipe portion 43. As shown in FIG. 2, the brake lever 34a is disposed in front of the right grip 38. The brake lever 35a is disposed in front of the left grip 37.

As shown in FIGS. 4 and 5, the straddled vehicle 1 includes a first support section 44 and a second support section 45. The first and second support sections 44 and 45 are fixed to the handle member 36. The first and second support sections 44 and 45 support the headlight 31. The second support section 45 supports the headlight 31 in a lower position than the first support section 44. The first support section 44 supports the meter unit 32.

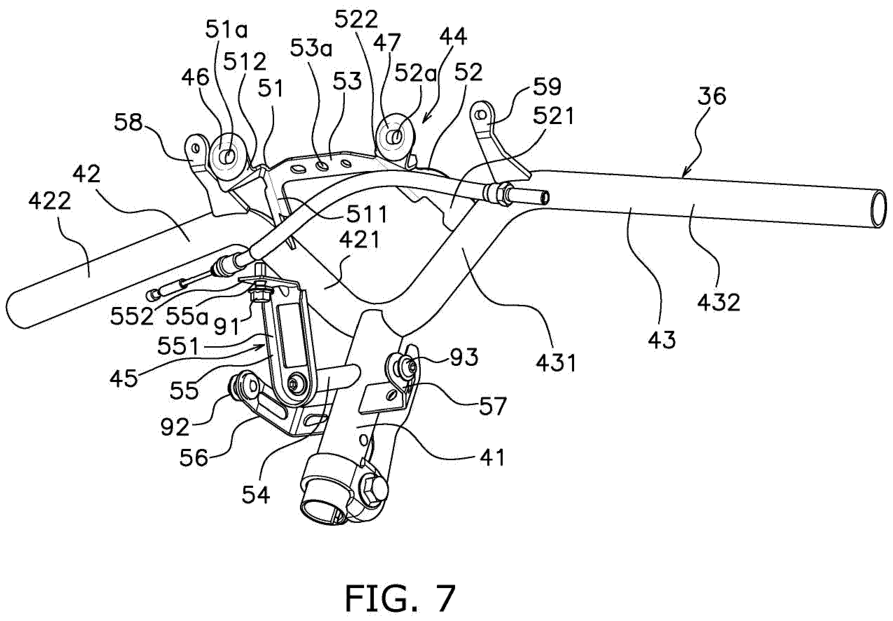

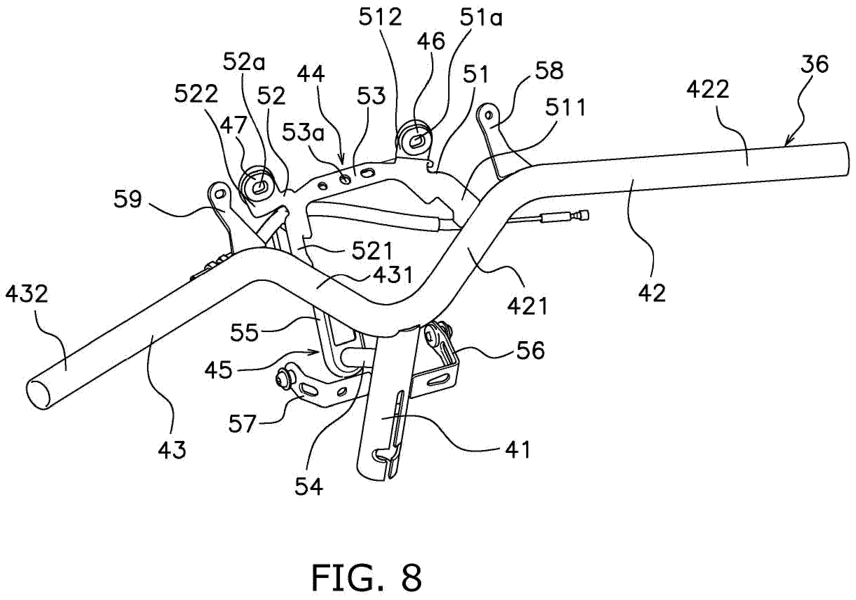

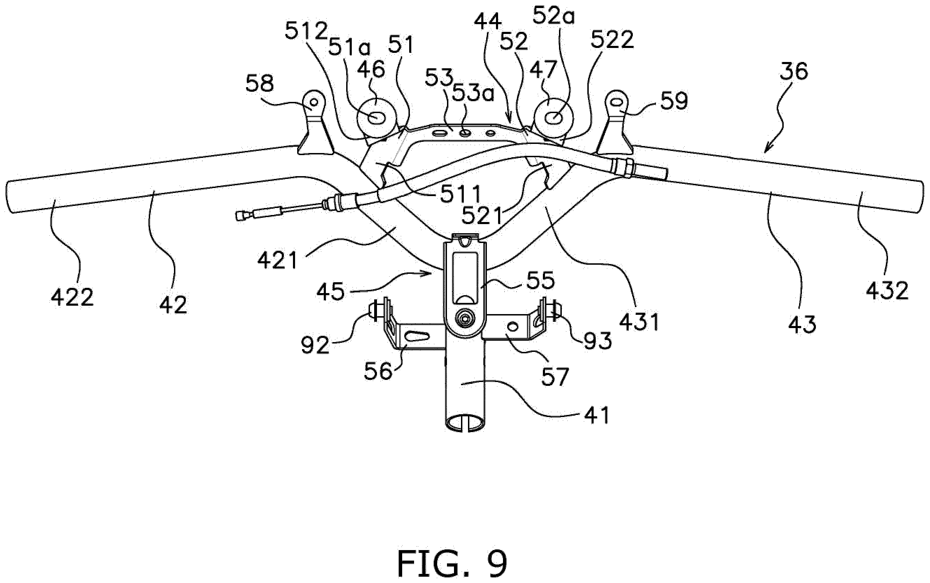

FIG. 7 is a perspective view of the configuration shown in FIG. 3 as seen from a lower front side and shows a condition that the handle cover 33, the headlight 31, and the meter unit 32 are detached therefrom. FIG. 8 is a perspective view of the configuration shown in FIG. 7 as seen from an upper rear side. FIG. 9 is a front view of the configuration shown in FIG. 7. FIGS. 7, 8, and 9 omit illustration of a holding member 82 (to be described).

As shown in FIGS. 7 to 9, the first support section 44 is disposed between the right-side pipe portion 42 and the left-side pipe portion 43. The first support section 44 includes a first support portion 51, a second support portion 52, and a third support portion 53. The first support portion 51 is fixed to the handle member 36. The second support portion 52 is fixed to the handle member 36. The first support portion 51 supports the headlight 31. The second support portion 52 supports the headlight 31. The first support portion 51 is connected to the inner portion 421 of the right-side pipe portion 42 and extends from the inner portion 421 forward and upward. The second support portion 52 is connected to the inner portion 431 of the left-side pipe portion 43 and extends from the inner portion 431 forward and upward. The third support portion 53 is disposed between the first and second support portions 51 and 52. The third support portion 53 supports the meter unit 32.

When described in detail, as shown in FIG. 8, the first support portion 51 includes a first root portion 511 and a first upper support portion 512. The first root portion 511 is connected to the inner portion 421 of the right-side pipe portion 42 and extends from the inner portion 421 forward and upward. The first upper support portion 512 is disposed on the distal end of the first root portion 511. The first upper support portion 512 is disposed to extend upward from the distal end of the first root portion 511. The first upper support portion 512 is a portion formed by bending upward the distal end of the first support portion 51. The first upper support portion 512 is provided with a through hole 51a. A grommet 46 is inserted into the through hole 51a. The grommet 46 is an exemplary elastic body having a tubular shape. A first protrusion 64 (to be described) of the headlight 31 is inserted into an inner portion of the grommet 46.

Likewise, the second support portion 52 includes a second root portion 521 and a second upper support portion 522. The second root portion 521 is connected to the inner portion 431 of the left-side pipe portion 43 and extends from the inner portion 431 forward and upward. The second upper support portion 522 is disposed on the distal end of the second root portion 521. The second upper support portion 522 is disposed to extend upward from the distal end of the second root portion 521. The second upper support portion 522 is a portion formed by bending upward the distal end of the second support portion 52. The second upper support portion 522 is provided with a through hole 52a. A grommet 47 is inserted into the through hole 52a. The grommet 47 is an exemplary elastic body having a tubular shape. A second protrusion 65 (to be described) of the headlight 31 is inserted into an inner portion of the grommet 47.

As shown in FIG. 9, the third support portion 53 is disposed between the first and second support portions 51 and 52. The third support portion 53 is disposed along the right-and-left direction so as to connect therethrough the first and second support portions 51 and 52. The third support portion 53 connects therethrough a distal end portion of the first root portion 511 and a distal end portion of the second root portion 521. The first root portion 511, the third support portion 53, and the second root portion 521 are configured to connect the inner portion 421 of the right-side pipe portion 42 and the inner portion 431 of the left-side pipe portion 43 in a curved shape. The third support portion 53 includes a through hole 53a provided in the middle thereof in the width direction. The meter unit 32 is fixed by a screw inserted through the through hole 53a.

As shown in FIG. 7, the second support section 45 is fixed to the up-and-down pipe portion 41 of the handle member 36. The second support section 45 includes a support protrusion 54 and a lower-side support member 55. The support protrusion 54 protrudes forward from the up-and-down pipe portion 41. As shown in FIG. 5, the support protrusion 54 tilts down to the distal end thereof with respect to a horizontal direction. The lower-side support member 55 is disposed on the distal end of the support protrusion 54. As shown in FIG. 7, the lower-side support member 55 includes an up-and-down portion 551 and a lower-side support portion 552. The up-and-down portion 551 is fastened to the distal end of the support protrusion 54. The up-and-down portion 551 extends forward and upward from the distal end of the support protrusion 54. The lower-side support portion 552 extends forward from the upper end of the up-and-down portion 551. The lower-side support portion 552 includes a through hole 55a penetrating therethrough along the up-and-down direction. The lower-side support portion 552 is fixed to a lower-side supported portion 66 (to be described) of the headlight 31 by a bolt 91.

As shown in FIG. 7, the straddled vehicle 1 further includes a pair of cover lower support portions 56 and 57 and a pair of cover upper support portions 58 and 59. The pair of cover lower support portions 56 and 57 and the pair of cover upper support portions 58 and 59 are fixed to the handle member 36.

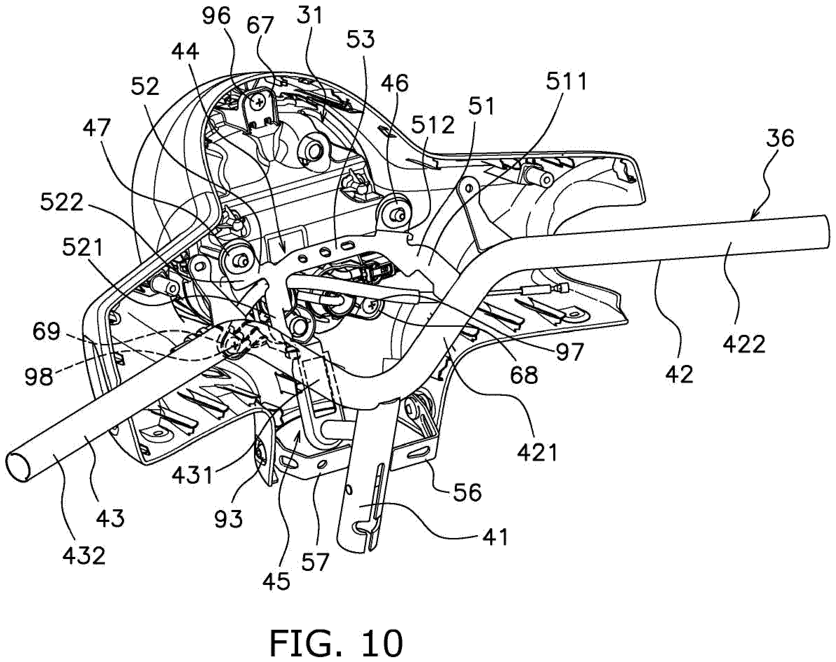

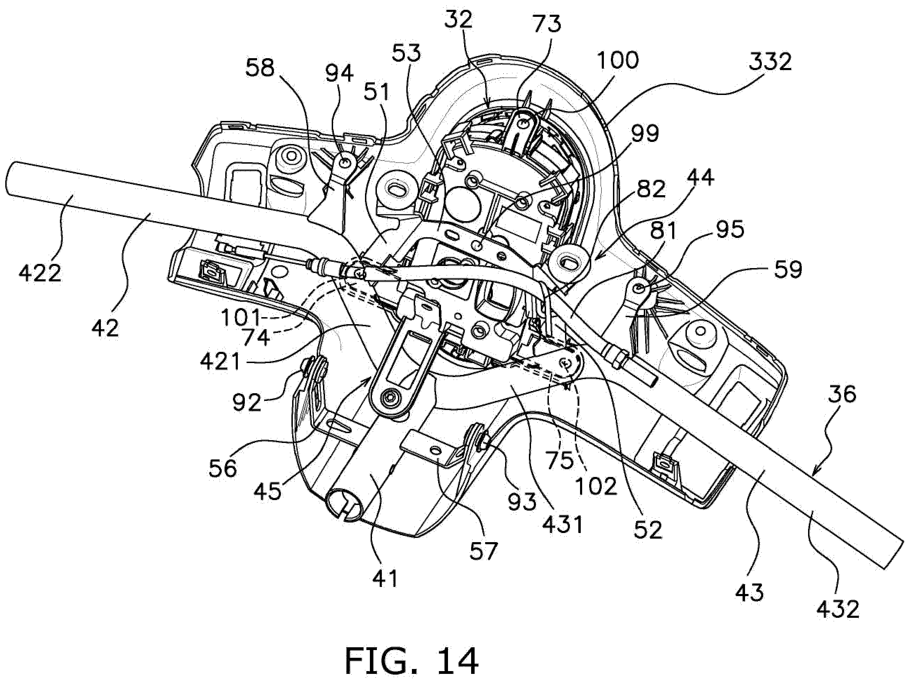

As shown in FIGS. 10 and 14 (to be described), the pair of cover lower support portions 56 and 57 supports the front cover 331 and the rear cover 332. The pair of cover lower support portions 56 and 57 are fixed to the up-and-down pipe portion 41. As shown in FIG. 7, the cover lower support portion 56 extends rightward from the up-and-down pipe portion 41 and then extends forward from the right end thereof. The cover lower support portion 57 extends leftward from the up-and-down pipe portion 41 and then extends forward from the left end thereof. As shown in FIGS. 10 and 14, the handle cover 33 is attached to the distal end portions of the cover lower support portions 56 and 57 by screws 92 and 93, respectively. Both a lower portion of the front cover 331 and that of the rear cover 332 are fixed to the cover lower support portion 56 by the screw 92. Both the lower portion of the front cover 331 and that of the rear cover 332 are fixed to the cover lower support portion 57 by the screw 93.

The pair of cover upper support portions 58 and 59, shown in FIGS. 7 and 8, supports the rear cover 332. The cover upper support portion 58 is fixed to the right-side pipe portion 42. The cover upper support portion 58 obliquely extends forward and upward from the right-side pipe portion 42. The cover upper support portion 58 is fixed to a position proximal to a connecting portion between the inner portion 421 and the outer portion 422. As shown in FIG. 14 (to be described), the rear cover 332 is attached to an upper end portion of the cover upper support portion 58 by a screw 94.

As shown in FIGS. 7 and 8, the cover upper support portion 59 is fixed to the left-side pipe portion 43. The cover upper support portion 59 obliquely extends forward and upward from the left-side pipe portion 43. The cover upper support portion 59 is fixed to a position proximal to a connecting portion between the inner portion 431 and the outer portion 432. As shown in FIG. 14 (to be described), the rear cover 332 is attached to an upper end portion of the cover upper support portion 59 by a screw 95.

As shown in FIG. 5, the headlight 31 includes a lens portion 61 and a housing portion 62. As shown in FIG. 3, the lens portion 61 is exposed forward at a front surface 61a thereof from the handle cover 33. The housing portion 62 is disposed on the handle 16 side (the rear side) of the lens portion 61. The housing portion 62 covers the rear side of the lens portion 61.

As shown in FIG. 5, the lens portion 61 includes the front surface 61a and an outer peripheral surface 61b. The front surface 61a has a circular shape. The outer peripheral surface 61b is disposed to be directed rearward from the circumference of the front surface 61a.

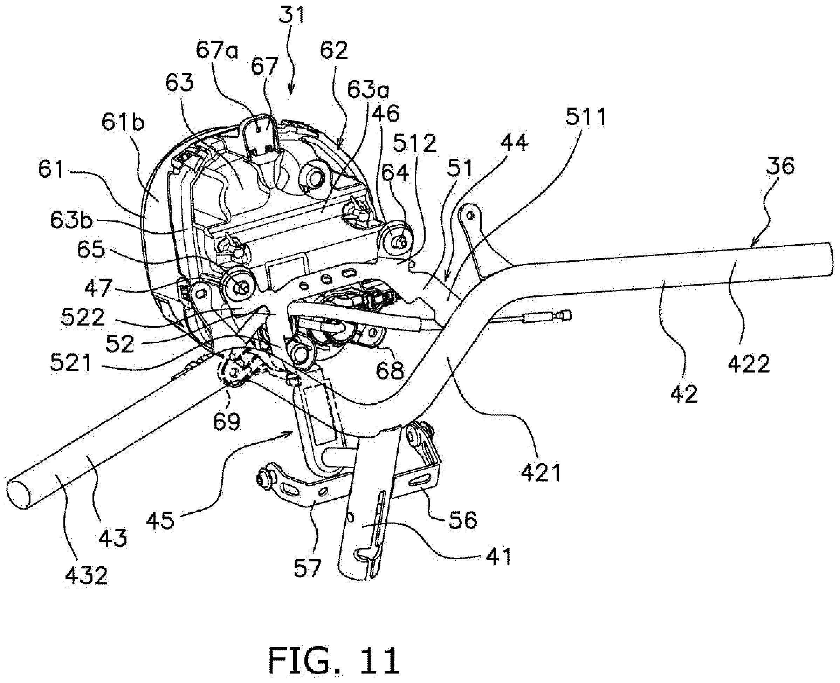

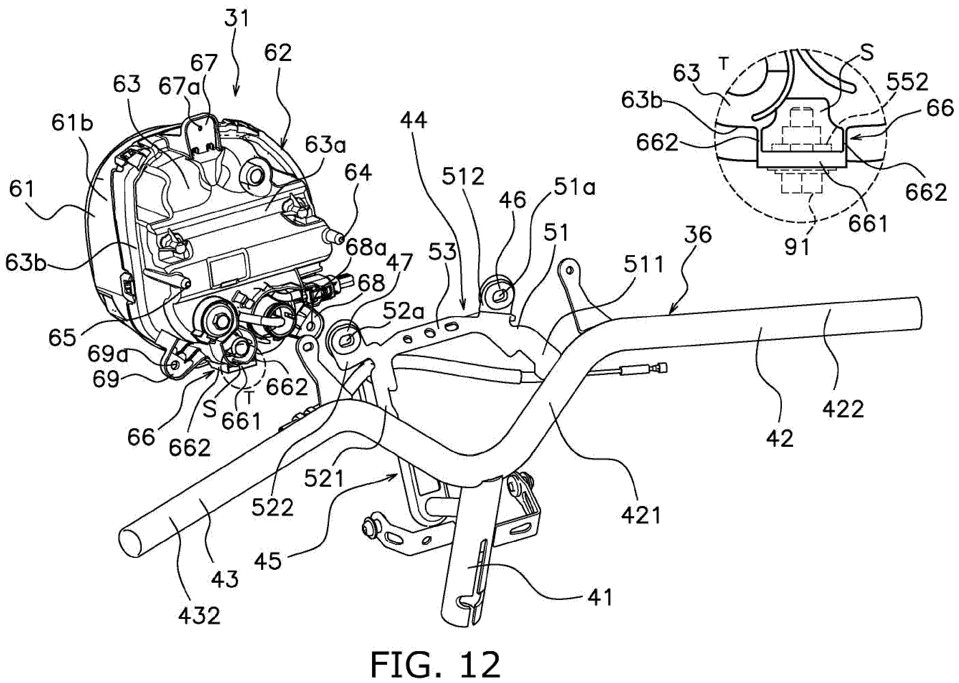

FIG. 10 is a view of the configuration shown in FIG. 3 and shows a condition that the meter unit 32 and the rear cover 332 are detached therefrom. FIG. 11 is a perspective view of the configuration shown in FIG. 10 as seen from the rear side and shows a condition that the front cover 331 is detached therefrom. FIG. 12 is a view of the configuration shown in FIG. 11 and shows a condition that the headlight 31 is disassembled from the first and second support sections 44 and 45.

As shown in FIG. 12, the housing portion 62 includes a body 63, the first protrusion 64, the second protrusion 65, the lower-side supported portion 66, a first front cover connecting portion 67, a second front cover connecting portion 68, and a third front cover connecting portion 69. The body 63 covers the rear side of the lens portion 61. The body 63 includes a rear surface 63a and an outer peripheral surface 63b. The rear surface 63a is opposed to the front surface 61a of the lens portion 61. The outer peripheral surface 63b is disposed to be directed forward from the circumference of the rear surface 63a. The outer peripheral surface 63b of the body 63 is fitted to the outer peripheral surface 61b of the lens portion 61 so as to combine the body 63 and the lens portion 61.

As shown in FIG. 12, the first protrusion 64 is disposed on the right end of the rear surface 63a of the body 63. The first protrusion 64 protrudes toward the handle member 36 from the rear surface 63a. The configuration that the first protrusion 64 protrudes toward the handle member 36 means that the first protrusion 64 protrudes rearward.

The second protrusion 65 is disposed on the left end of the rear surface 63a of the body 63. The second protrusion 65 protrudes toward the handle member 36 from the rear surface 63a. The configuration that the second protrusion 65 protrudes toward the handle member 36 means that the second protrusion 65 protrudes rearward. The first and second protrusions 64 and 65 are disposed in alignment in the right-and-left direction.

As shown in FIG. 11, the first protrusion 64 is inserted into the grommet 46 disposed on the first support portion 51. The second protrusion 65 is inserted into the grommet 47 disposed on the second support portion 52. Accordingly, the headlight 31 is supported by the first support section 44 fixed to the handle 16.

As shown in FIGS. 5 and 12, the lower-side supported portion 66 is disposed on the lower side of the outer peripheral surface 63b of the body 63. FIG. 12 shows a closeup rear view of a region T proximal to the lower-side supported portion 66. The lower-side supported portion 66 includes a bottom surface portion 661 and a pair of lateral surface portions 662. The bottom surface portion 661 is disposed below the outer peripheral surface 63b at a predetermined distance. The bottom surface portion 661 has a plate shape. The bottom surface portion 661 includes a through hole penetrating therethrough along the up-and-down direction. The pair of lateral surface portions 662 is disposed to be directed upward from both ends of the bottom surface portion 661 in the right-and-left direction. The pair of lateral surface portions 662 is connected at the upper ends thereof to the outer peripheral surface 63b.

As shown in FIGS. 5 and 12, the lower-side support portion 552 is inserted into a space S enclosed by the bottom surface portion 661, the pair of lateral surface portions 662, and the body 63. As shown in the closeup view of a region T of FIG. 12, the space S is recessed into the body 63. As shown in FIGS. 4 and 5, while the lower-side support portion 552 is inserted into the space S, the lower-side support portion 552 and the bottom surface portion 661 are fastened by the bolt 91 through the through hole provided in the bottom surface portion 661. Accordingly, the headlight 31 is supported by the second support section 45 from below. In the closeup view of the region T shown in FIG. 12, the bolt 91 and the lower-side support portion 552 are depicted with dotted line.

As shown in FIG. 10, the first front cover connecting portion 67, the second front cover connecting portion 68, and the third front cover connecting portion 69 are portions for connecting the headlight 31 to the front cover 331.

As shown in FIG. 11, the first front cover connecting portion 67 is disposed on the upper side of the outer peripheral surface 63b of the body 63. The first front cover connecting portion 67 includes a through hole 67a penetrating therethrough in the back-and-forth direction in a plan view. The front cover 331 includes a boss provided with a screw hole in an opposed position to the through hole 67a. As shown in FIG. 10, a screw 96 is inserted into the screw hole provided in the boss of the front cover 331 through the through hole 67a. Accordingly, the first front cover connecting portion 67 is connected to the front cover 331.

As shown in FIG. 12, the second front cover connecting portion 68 is disposed on the right lateral surface side of the body 63. The second front cover connecting portion 68 protrudes rightward and downward from a right portion of the outer peripheral surface 63b of the body 63. The second front cover connecting portion 68 is disposed between the first protrusion 64 and the lower-side supported portion 66 in the circumferential direction of the outer peripheral surface 63b. The second front cover connecting portion 68 is provided with a through hole 68a in the distal end thereof. Besides, the front cover 331 includes a boss provided with a screw hole in an opposed position to the through hole 68a. As shown in FIG. 10, a screw 97 is inserted into the screw hole provided in the boss of the front cover 331 through the through hole 68a. Accordingly, the second front cover connecting portion 68 is connected to the front cover 331.

As shown in FIG. 12, the third front cover connecting portion 69 is disposed on the left lateral surface side of the body 63. The third front cover connecting portion 69 protrudes leftward and downward from a left portion of the outer peripheral surface 63b of the body 63. The third front cover connecting portion 69 is disposed between the second protrusion 65 and the lower-side supported portion 66 in the circumferential direction of the outer peripheral surface 63b. The third front cover connecting portion 69 is disposed in alignment with the second front cover connecting portion 68 in the right-and-left direction. The third front cover connecting portion 69 is provided with a through hole 69a in the distal end thereof. Besides, the front cover 331 includes a boss provided with a screw hole in an opposed position to the through hole 69a. As shown in FIG. 10, a screw 98 is inserted into the screw hole provided in the boss of the front cover 331 through the through hole 69a. Accordingly, the third front cover connecting portion 69 is connected to the front cover 331. It should be noted that in FIG. 10, the third front cover connecting portion 69 and the screw 98 are invisible due to the handle 16; hence, the third front cover connecting portion 69 and the screw 98 are depicted with dotted line.

As described above, the first front cover connecting portions 67, the second front cover connecting portions 68, and the third front cover connecting portions 69 are screwed to the bosses of the front cover 331, respectively, whereby the headlight 31 and the front cover 331 are connected. Besides, as shown in FIG. 10, the front cover 331 is supported by the handle member 36 through the cover lower support portions 56 and 57. Thus, the headlight 31 is supported by the first support section 44, the second support section 45, and the handle cover 33.

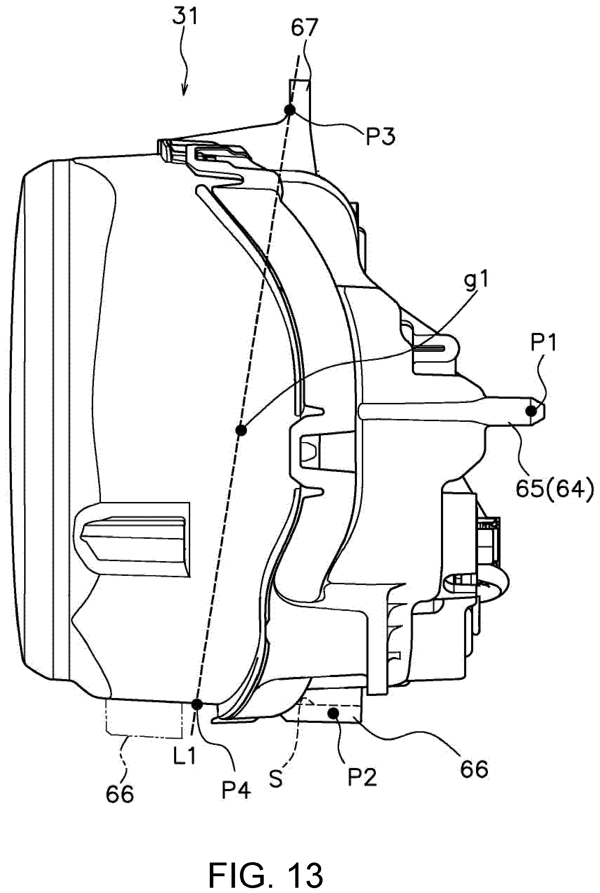

Next, a relation between a center of gravity of the headlight 31 and a position in which the headlight 31 is supported will be explained. FIG. 13 is a side view of the headlight 31. In FIG. 13, the up-and-down direction is matched with the up-and-down direction of the straddled vehicle 1.

In FIG. 13, reference sign g1 represents the center of gravity of the headlight 31. In FIG. 13, reference sign P1 represents a position in which each of the first and second protrusions 64 and 65 of the headlight 31 is supported by the first support section 44. The position P1 is located approximately identical to the center of gravity g1 of the headlight 31 in the up-and-down direction. It should be noted that the position P1 may be located on an upper side than the center of gravity g1 of the headlight 31.

On the other hand, in FIG. 13, reference sign P2 represents a position in which the lower-side supported portion 66 of the headlight 31 is supported by the second support section 45. The position P2 is located on a lower side than the center of gravity g1 in the up-and-down direction. The position P2 is set on the lower side of the headlight 31.

Now, reference sign L1 is defined as representing an imaginary straight line that passes through the center of gravity g1 and a position P3 in which the first front cover connecting portion 67 and the front cover 331 are connected. In this case, the position P2 is set to be proximal to a position P4 of an intersection between the imaginary straight line L1 and the lower side of the headlight 31. Accordingly, it is possible to provide a structure intended to easily achieve an advantageous effect of inhibiting vibrations of the headlight 31.

It should be noted that the position P2, in which the headlight 31 is supported by the second support section 45, is set behind the position P4; however, the position P2 may be located identical to, or on the front side of, the position P4 in the back-and-forth direction. In FIG. 13, the lower-side supported portion 66, assumed to be disposed on the front side of the position P4, is depicted with dashed two-dotted line. By thus locating the position P2 away from the handle 16 (in a front side position), vibrations of the headlight 31 can be reliably inhibited.

The meter unit 32 is supported by the handle cover 33 and the first support section 44. As shown in FIG. 5, the meter unit 32 is disposed to tilt such that the front end thereof is located in a higher position than the rear end thereof. As shown in FIG. 6, the meter unit 32 is disposed between a position in which the first protrusion 64 of the headlight 31 is supported by the first support portion 51 and a position in which the second protrusion 65 of the headlight 31 is supported by the second support portion 52 in the width direction. Thus, the positions in which the headlight 31 is supported are set outside the meter unit 32, whereby the headlight 31 and the meter unit 32 can be disposed at narrow intervals.

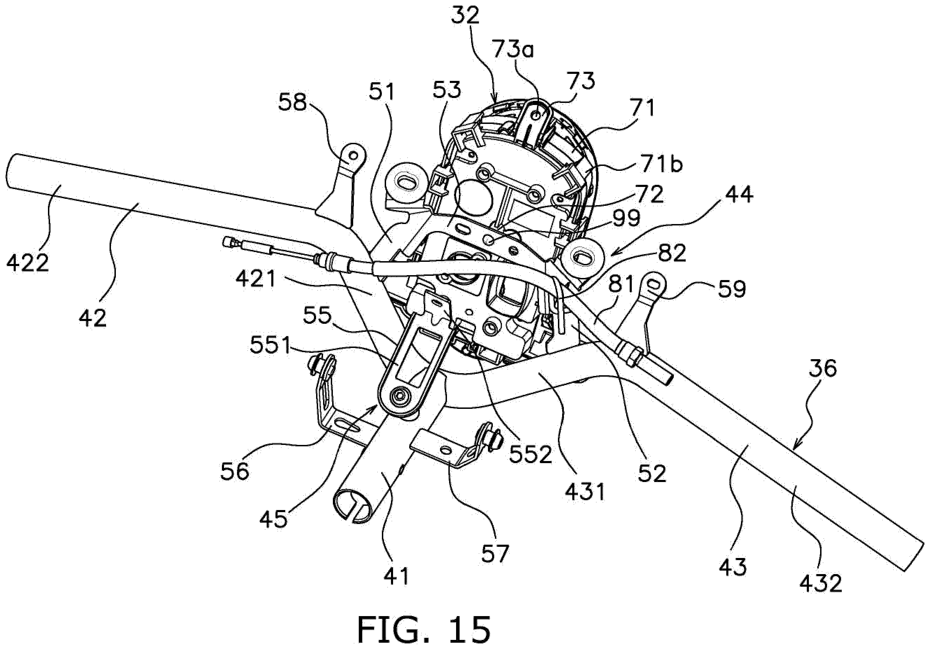

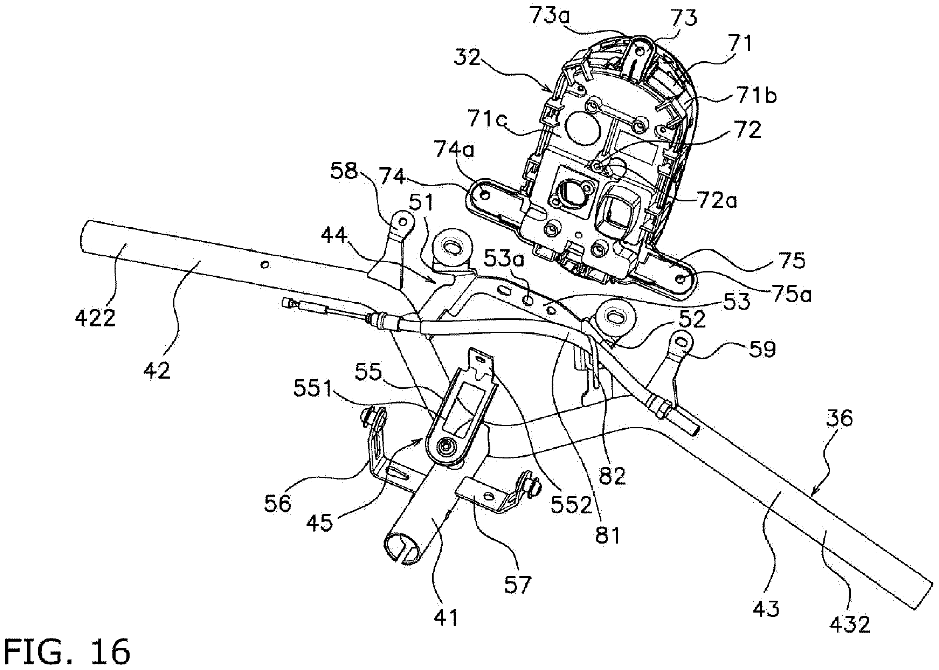

FIG. 14 is a view of the configuration shown in FIG. 3 and shows a condition that the front cover 331 and the headlight 31 are detached therefrom. FIG. 15 is a perspective view of the configuration shown in FIG. 14 and shows a condition that the rear cover 332 is detached therefrom. FIG. 16 is an exploded view of the configuration shown in FIG. 15 and shows a condition that the meter unit 32 is detached therefrom.

As shown in FIG. 16, the meter unit 32 includes a meter body 71, a boss portion 72, a first rear cover connecting portion 73, a second rear cover connecting portion 74, and a third rear cover connecting portion 75. The meter body 71 includes a front surface 71a (see FIG. 6), an outer peripheral surface 71b (see FIG. 5), and a rear surface 71c (see FIG. 16). The front surface 71a includes a display screen on which a speed or so forth is displayed. The meter body 71 accommodates a board and so forth for causing the display screen to function. The length of the meter unit 32 is greater in the back-and-forth direction arranged in parallel to the front surface 71a than in the right-and-left direction. The meter unit 32 is shaped to be vertically elongated.

As shown in FIG. 16, the boss portion 72 is disposed on the rear surface 71c. The boss portion 72 is disposed to be perpendicular to the rear surface 71c. The boss portion 72 is provided with a screw hole 72a perpendicular to the rear surface 71c. The boss portion 72 is disposed on approximately the middle of the rear surface 71c. As shown in FIG. 15, a screw 99 is inserted into the screw hole 72a through the through hole 53a provided in the third support portion 53 of the first support section 44, whereby the meter unit 32 is supported by the first support section 44.

The meter unit 32 is connected at the first rear cover connecting portions 73, the second rear cover connecting portion 74, and the third rear cover connecting portion 75 to the rear cover 332.

As shown in FIG. 16, the first rear cover connecting portion 73 is disposed on the upper side of the outer peripheral surface 71b of the meter body 71. The first rear cover connecting portion 73 is provided with a through hole 73a penetrating therethrough along the back-and-forth direction in a plan view. The rear cover 332 includes a boss provided with a screw hole in an opposed position to the through hole 73a. As shown in FIG. 14, a screw 100 is inserted into the screw hole of the boss of the rear cover 332 through the through hole 73a. Accordingly, the first rear cover connecting portion 73 is connected to the rear cover 332.

As shown in FIG. 16, the second rear cover connecting portion 74 is disposed on the right lateral surface side of the meter body 71. The second rear cover connecting portion 74 protrudes rightward from a lower portion of the right side of the outer peripheral surface 71b of the meter body 71. The second rear cover connecting portion 74 is provided with a through hole 74a in the tip of the right end thereof. The rear cover 332 includes a boss provided with a screw hole in an opposed position to the through hole 74a. A screw 101 is inserted into the screw hole of the boss of the rear cover 332 through the through hole 74a. It should be noted that in FIG. 14, the screw 101 is hidden by the handle member 36 and is therefore depicted with dotted line. Accordingly, the second rear cover connecting portion 74 is connected to the rear cover 332.

As shown in FIG. 16, the third rear cover connecting portion 75 is disposed on the left lateral surface side of the meter body 71. The third rear cover connecting portion 75 protrudes leftward from a lower portion of the left side of the outer peripheral surface 71b of the meter body 71. The third rear cover connecting portion 75 is provided with a through hole 75a in the tip of the left end thereof. The rear cover 332 includes a boss provided with a screw hole in an opposed position to the through hole 75a. A screw 102 is inserted into the screw hole of the boss of the rear cover 332 through the through hole 75a. It should be noted that in FIG. 14, the screw 102 is hidden by the handle member 36 and is therefore depicted with dotted line. Accordingly, the third rear cover connecting portion 75 is connected to the rear cover 332.

As described above, the first rear cover connecting portion 73, the second rear cover connecting portion 74, and the third rear cover connecting portion 75 are screwed to the bosses of the rear cover 332, respectively, whereby the meter unit 32 and the rear cover 332 are connected.

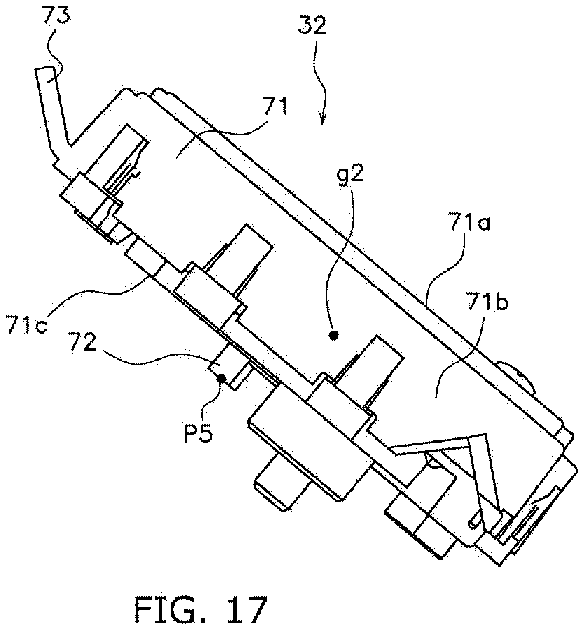

Next, a relation between a center of gravity of the meter unit 32 and a position in which the meter unit 32 is supported will be explained. FIG. 17 is a side view of the meter unit 32.

In FIG. 17, reference sign g2 represents the center of gravity of the meter unit 32. In FIG. 17, the up-and-down direction is matched with the up-and-down direction of the straddled vehicle 1. Reference sign P5 represents a position in which the boss portion 72 of the meter unit 32 is supported by the third support portion 53 of the first support section 44. The position P5 is set to be proximal to the center of gravity g2. Besides, the center of gravity g2 is disposed in approximately the middle of the meter unit 32 in the right-and-left direction. On the other hand, the through hole 53a for supporting the meter unit 32 is disposed in the middle of the straddled vehicle 1 in the right-and-left direction. Because of this, the position P5 is set to be proximal to the center of gravity g2 in the right-and-left direction as well.

As shown in FIG. 16, the straddled vehicle 1 further includes a combined brake wire 81 and the holding member 82. The combined brake wire 81 connects the right brake 34 and the left brake 35 therethrough. The combined brake wire 81 is disposed along the right-and-left direction so as to extend from the right brake 34 to the left brake 35. The combined brake wire 81 extends in front of the first support section 44. The holding member 82 holds the combined brake wire 81. The holding member 82 is, for instance, a guide wire. The holding member 82 is attached to the front surface of the second support portion 52. The holding member 82 is disposed to cover the combined brake wire 81 from above. The configuration can prevent occurrence of a situation that the combined brake wire 81 contacts with other components due to vibrations, shocks, or so forth.

In the straddled vehicle 1 according to the present preferred embodiment explained above, as shown in FIG. 11, the headlight 31 is supported in the up and down positions by the first and second support sections 44 and 45 fixed to the handle 16. Accordingly, vibrations transferred from a frame assembly composed of the front fork 15, the head pipe 11, and so forth can be inhibited. Besides, as shown in FIG. 13, a stiffness enough to support the headlight 31 can be exerted by supporting the headlight 31 in the positions P1 and P2 divided up and down; hence, a type of headlight configured as a large-sized heavy object can be used as the headlight 31. The stiffness enough to support the headlight 31 can be exerted by the first and second support sections 44 and 45 fixed to the handle 16; hence, increase in size of the handle cover 33 is not required to support the headlight 31, and therefore, the handle cover 33 can be made compact. Besides, the headlight 31 is supported by the up and down positions; hence, vibrations can be effectively inhibited at lesser support sites.

As described above, wobbling of the headlight 31 can be inhibited and the strength enough to support the headlight 31 can be obtained; hence, the headlight 31 can be enhanced in design flexibility. Besides, such a heavy headlight as an LED light can be used as well.

Moreover, in the straddled vehicle 1 according to the present preferred embodiment, as shown in FIG. 11, the first support section 44 includes the first and second support portions 51 and 52. The first support portion 51 supports the headlight 31. The second support portion 52 supports the headlight 31, while being disposed in alignment with the first support portion 51 in the right-and-left direction. Thus, the first support section 44, which is the upper one of the support portions, supports the headlight 31 in two positions in the right-and-left direction; hence, wobbling in the right-and-left direction can be inhibited as well.

Furthermore, in the straddled vehicle 1 according to the present preferred embodiment, as shown in FIG. 11, the headlight 31 includes the first and second protrusions 64 and 65 protruding toward the handle 16. The first support portion 51 includes the through hole 51a (exemplary first through hole) and the grommet 46 (exemplary first elastic body having a tubular shape) that is disposed in the through hole 51a and causes the first protrusion 64 to be inserted thereto. The second support portion 52 includes the through hole 52a (exemplary second through hole) and the grommet 47 (exemplary second elastic body having a tubular shape) that is disposed in the through hole 52a and causes the second protrusion 65 to be inserted thereto. Thus, the headlight 31 is supported through the grommets 46 and 47, whereby vibrations attributed to wobbling of the headlight 31 can be attenuated.

In the straddled vehicle 1 according to the present preferred embodiment, as shown in FIG. 13, the first support section 44 may supports the headlight 31 in the position P1 located identical to, or on a higher side than, the center of gravity g1 of the headlight 31 in the up-and-down direction. The second support section 45 supports the headlight 31 in the position P2 located on a lower side than the center of gravity g1 of the headlight 31. By supporting the headlight 31 in the positions described above, it is made possible to produce a structure intended to easily achieve an advantageous effect of inhibiting vibrations of the headlight 31.

In the straddled vehicle 1 according to the present preferred embodiment, as shown in FIG. 5, the second support section 45 supports the headlight 31 from below. Accordingly, vibrations of the headlight 31 can be effectively inhibited.

In the straddled vehicle 1 according to the present preferred embodiment, as shown in FIGS. 7 and 8, the handle 16 includes the up-and-down pipe portion 41 extending in the up-and-down direction and the right-side and left-side pipe portions 42 and 43 extending from a top of the up-and-down pipe portion 41 in the width direction. The first support section 44 extends from the right-side and left-side pipe portions 42 and 43 toward the headlight 31. The second support section 45 extends from the up-and-down pipe portion 41 toward the headlight 31. In this case, the headlight 31 can be supported by the first and second support sections 44 and 45 extending from the handle 16.

As shown in FIG. 6, the straddled vehicle 1 according to the present invention further includes the meter unit 32 disposed behind the headlight 31. The first and second support portions 51 and 52 may support the headlight 31 in positions located bilaterally outside the meter unit 32 in the width direction. In this case, the headlight 31 is supported in the positions located bilaterally outside the meter unit 32; hence, the headlight 31 and the meter unit 32 can be approached to each other. Because of this, even in use of a headlight, a meter unit, and so forth that are greater in size than conventional ones, those components can be compactly set in place.

As shown in FIG. 5, the straddled vehicle 1 according to the present invention further includes the meter unit 32 disposed behind the headlight 31. As shown in FIG. 15, the first support section 44 supports the meter unit 32. Further according to the invention, the meter unit 32 is supported by the first support section 44 fixed to the handle 16; hence, a strength enough to support the meter unit 32 can be obtained. Besides, the first support section 44 supporting the headlight 31 functions to support the meter unit 32 as well; hence, reduction in number of components can be achieved, whereby compactness in structure can be achieved.

In the straddled vehicle 1 according to the present preferred embodiment, as shown in FIG. 17, the first support section 44 supports the meter unit 32 in the position proximal to the center of gravity g2 of the meter unit 32. In this case, the weight of the meter unit 32 can be mainly supported by the handle 16; hence, the weight of the meter unit 32, acting on the handle cover 33, can be reduced. Besides, a stress of the handle cover 33 can be lessened by using the meter unit 32 as a load-bearing member.

In the straddled vehicle 1 according to the present preferred embodiment, as shown in FIGS. 5 and 6, the meter unit 32 is longer in the back-and-forth direction than in the width direction. When such a vertically elongated type of meter unit is used as the meter unit 32, the meter unit 32 greatly wobbles up and down. However, the meter unit 32 is supported by the first support section 44 fixed to the handle 16; hence, wobbling of the meter unit 32 can be inhibited.

In the straddled vehicle 1 according to the present preferred embodiment, as shown in FIG. 9, the first support section 44 includes the first support portion 51, the second support portion 52, and the third support portion 53. As shown in FIG. 11, the first support portion 51 supports the headlight 31. The second support portion 52 supports the headlight 31, while being disposed in alignment with the first support portion 51 in the width direction. As shown in FIG. 15, the third support portion 53 supports the meter unit 32, while being disposed between the first support portion 51 and the second support portion 52 in the width direction. In this case, the meter unit 32 can be supported by the third support portion 53 of the first support section 44.

As shown in FIG. 16, the straddled vehicle 1 according to the present preferred embodiment further includes the combined brake wire 81 and the holding member 82. The combined brake wire 81 connects the right brake 34 and the left brake 35 therethrough. The holding member 82 holds the combined brake wire 81, while being disposed on the first support section 44. In this case, the combined brake wire 81 can be inhibited from contacting with other components in traveling.

The configuration to support the headlight 31 by the first support section 44 is not limited to that in the preferred embodiment described above and may be changed. For example, the first and second support portions 51 and 52 may be fastened to the headlight 31 by fastening members such as bolts or screws. For example, the first support section 44 supports the headlight 31 in two positions by the first and second support portions 51 and 52; however, the first support section 44 may support the headlight 31 in a single position by the middle thereof in the width direction. For example, the third support portion 53 may extend from the handle member 36 in a similar manner to the first and second support portions 51 and 52. The third support portion 53 supports the meter unit 32 in the single position; however, the third support portion 53 may be provided with a plurality of through holes and may support the meter unit 32 in two or more positions.

The configuration to support the headlight 31 by the second support section 45 is not limited to that in the preferred embodiment described above and may be changed. For example, the lower-side support member 55 of the second support section 45 may be fastened to the headlight 31 by a fastening member such as a bolt or a screw from below the headlight 31 without being configured to be inserted into the space of the lower-side supported portion 66.

The configuration to hold the combined brake wire 81 by the holding member 82 is not limited to that in the preferred embodiment described above and may be changed. The combined brake wire 81 may be held by fixing a clamp member to the first support section 44 and causing the clamp member to clamp the combined brake wire 81.

### INDUSTRIAL APPLICABILITY

According to the present invention, a straddled vehicle is enabled to solve a vibration problem by exerting a stiffness enough to support a headlight, and simultaneously, to use a compact handle cover compatible with a large-sized headlight.

### REFERENCE SIGNS LIST

1: Straddled vehicle, 16: Handle, 31: Headlight, 32: Meter unit, 33: Handle cover, 34: Right brake, 35: Left brake, 41: Up-and-down pipe portion, 42: Right-side pipe portion, 43: Left-side pipe portion, 44: First support section, 45; Second support section, 46: Grommet, 47: Grommet, 51: First support portion, 52: Second support portion, 53: Third support portion, 65: First protrusion, 65: Second protrusion, 81: Combined brake wire, 82: Holding member

## Claims

1. A straddled vehicle (1) comprising:
a handle (16);
a headlight (31) disposed in front of the handle (16) with regard to a back-and-forth direction of the vehicle;
a handle cover (33) covering the handle (16) and the headlight (31) from front and behind with regard to the back-and-forth direction of the vehicle;
a first support section (44) fixed to the handle (16), the first support section (44) supporting the headlight (31);
a second support section (45) fixed to the handle (16), the second support section (45) supporting the headlight (31) on a lower side than the first support section (44) with regard to an up-and-down direction of the vehicle; and
a meter unit (32) disposed behind the headlight (31) with regard to the back-and-forth direction of the vehicle, **characterized in that** the first support section (44) supports the meter unit (32).

2. The straddled vehicle (1) according to claim 1, **characterized in that** the first support section (44) includes
a first support portion (51) supporting the headlight (31), and
a second support portion (52) supporting the headlight (31), the second support portion (52) disposed in alignment with the first support portion (51) in a width direction of the vehicle.

3. The straddled vehicle (1) according to claim 2, **characterized in that** the first support section (44) further includes a third support portion (53) supporting the meter unit (32), the third support portion (53) disposed between the first support portion (51) and the second support portion (52) in the width direction of the vehicle.

4. The straddled vehicle (1) according to claim 2 or 3, **characterized in that** the headlight (31) includes a first protrusion (64) and a second protrusion (65), the first protrusion (64) and the second protrusion (65) protruding toward the handle (16),
the first support portion (51) includes a first through hole (51a) and a first elastic body (46), the first elastic body (46) having a tubular shape, the first elastic body (46) disposed in the first through hole (51a), the first elastic body (46) causing the first protrusion (64) to be inserted thereto, and
the second support portion (52) includes a second through hole (52a) and a second elastic body (47), the second elastic body (47) having a tubular shape, the second elastic body (47) disposed in the second through hole (52a), the second elastic body (47) causing the second protrusion (65) to be inserted thereto.

5. The straddled vehicle (1) according to any one of claims 1 to 4, **characterized in that** the first support section (44) supports the headlight (31) in a position located identical to or on an upper side than a center of gravity (g1) of the headlight (31) in the up-and-down direction of the vehicle, and
the second support section (45) supports the headlight (31) in a position located on a lower side than the center of gravity (g1) of the headlight (31) in the up-and-down direction of the vehicle.

6. The straddled vehicle (1) according to any one of claims 1 to 5, **characterized in that** the second support section (45) supports the headlight (31) from below with regard to the up-and-down direction of the vehicle.

7. The straddled vehicle (1) according to any one of claims 1 to 6, **characterized in that** the handle (16) includes
an up-and-down pipe portion (41) extending in the up-and-down direction of the vehicle, and
a width pipe portion (42, 43) extending from a top of the up-and-down pipe portion (41) in the width direction of the vehicle,
the first support section (44) extends from the width pipe portion (42, 43) toward the headlight (31), and
the second support section (45) extends from the up-and-down pipe portion (41) toward the headlight (31).

8. The straddled vehicle (1) according to claim 2, **characterized in that** the first support portion (51) and the second support portion (52) support the headlight (31) in positions located bilaterally outside the meter unit (32) in the width direction of the vehicle.

9. The straddled vehicle (1) according to any one of claims 1 to 8, **characterized in that** the first support section (44) supports the meter unit (32) in a position proximal to a center of gravity (g2) of the meter unit (32).

10. The straddled vehicle (1) according to any one of claims 1 to 9, **characterized in that** the meter unit (32) is longer in the back-and-forth direction of the vehicle than in the width direction of the vehicle.

11. The straddled vehicle (1) according any one of claims 1 to 10, **characterized by**:
a combined brake wire (81) connecting a front brake of the vehicle and a rear brake of the vehicle therethrough; and
a holding member (82) holding the combined brake wire (81), the holding member (82) disposed on the first support section (44).

## Patentansprüche

1. Ein Spreiz-Sitz-Fahrzeug (1), das umfasst:
eine Griffstange (16);
einen Scheinwerfer (31), der vor der Griffstange (16), in Bezug auf eine Rückwärts-und-Vorwärts-Richtung des Fahrzeugs, angeordnet ist;
eine Griffstangenabdeckung (33), welche die Griffstange (16) und den Scheinwerfer (31) von vorne und hinten, in Bezug auf die Rückwärts-und-Vorwärts-Richtung des Fahrzeugs, abdeckt;
ein erstes Trägerteil (44), das an der Griffstange (16) befestigt ist, das erste Trägerteil (44) trägt den Scheinwerfer (31);
ein zweites Trägerteil (45), das an der Griffstange (16) befestigt ist, das zweite Trägerteil (45) trägt den Scheinwerfer (31) auf einer niedrigeren Seite als das erste Trägerteil (44), in Bezug auf eine Auf-und-Ab-Richtung des Fahrzeugs, trägt; und
eine Instrumenteneinheit (32), die hinter dem Scheinwerfer (31), in Bezug auf die Rückwärts-und-Vorwärts-Richtung des Fahrzeugs, angeordnet ist, **dadurch gekennzeichnet, dass** das erste Trägerteil (44) die Instrumenteneinheit (32) trägt.

2. Das Spreiz-Sitz-Fahrzeug (1) gemäß Anspruch 1, **dadurch gekennzeichnet, dass** das erste Trägerteil (44) enthält
einen ersten Tragabschnitt (51), der den Scheinwerfer (31) trägt, und
einen zweiten Tragabschnitt (52), der den Scheinwerfer (31) trägt, der zweite Tragabschnitt (52) in einer Breitenrichtung des Fahrzeugs mit dem ersten Tragabschnitt (51) ausgerichtet ist.

3. Das Spreiz-Sitz-Fahrzeug (1) gemäß Anspruch 2, **dadurch gekennzeichnet, dass** das erste Trägerteil (44) weiterhin einen dritten Tragabschnitt (53) enthält, der die Instrumenteneinheit (32) trägt, der dritte Tragabschnitt (53) ist in der Breitenrichtung des Fahrzeugs zwischen dem ersten Tragabschnitt (51) und dem zweiten Tragabschnitt (52) angeordnet.

4. Das Spreiz-Sitz-Fahrzeug (1) gemäß Anspruch 2 oder 3, **dadurch gekennzeichnet, dass** der Scheinwerfer (31) einen ersten Vorsprung (64) und einen zweiten Vorsprung (65) enthält, der erste Vorsprung (64) und der zweite Vorsprung (65) stehen zur Griffstange (16) hin vor,
der erste Tragabschnitt (51) ein erstes Durchgangsloch (51a) und einen ersten elastischen Körper (46) enthält, der erste elastische Körper (46) hat eine röhrenförmige Form, der erste elastische Körper (46) in dem ersten Durchgangsloch (51a) angeordnet ist, der erste elastische Körper (46) bewirkt, dass der erste Vorsprung (64) in diesen eingesetzt ist, und
der zweite Tragabschnitt (52) ein zweites Durchgangsloch (52a) und einen zweiten elastischen Körper (47) enthält, der zweite elastische Körper (47) eine röhrenförmige Form enthält, der zweite elastische Körper (47) in dem zweiten Durchgangsloch (52a) angeordnet ist, der zweite elastische Körper (47) bewirkt, dass der zweite Vorsprung (65) in diesen eingesetzt ist.

5. Das Spreiz-Sitz-Fahrzeug (1) gemäß irgendeinem der Ansprüche 1 bis 4, **dadurch gekennzeichnet, dass** das erste Trägerteil (44) den Scheinwerfer (31) in einer Position trägt, die identisch mit oder auf einer höheren Seite als ein Schwerpunkt (g1) des Scheinwerfers (31) in Auf-und-Ab-Richtung des Fahrzeugs ist, und
das zweite Trägerteil (45) den Scheinwerfer (31) in einer Position trägt, die auf einer niedrigeren Seite als der Schwerpunkt (g1) des Scheinwerfers (31) in der Auf-und-Ab-Richtung des Fahrzeugs liegt.

6. Das Spreiz-Sitz-Fahrzeug (1) gemäß irgendeinem der Ansprüche 1 bis 5, **dadurch gekennzeichnet, dass** das zweite Trägerteil (45) den Scheinwerfer (31) von unten in Bezug auf die Auf-und-Ab-Richtung des Fahrzeugs trägt.

7. Das Spreiz-Sitz-Fahrzeug (1) gemäß irgendeinem der Ansprüche 1 bis 6, **dadurch gekennzeichnet, dass** die Griffstange (16) enthält
einen Auf-und-Ab-Rohrabschnitt (41), der sich in der Auf-und-Ab-Richtung des Fahrzeugs erstreckt, und
einen Breiten-Rohrabschnitt (42, 43), der sich von oberen von dem Auf-und-Ab-Rohrabschnitts (41) in Breitenrichtung des Fahrzeugs erstreckt,
das erste Trägerteil (44) erstreckt sich von dem Breiten-Rohrabschnitt (42, 43) in Richtung des Scheinwerfers (31), und
das zweite Trägerteil (45) erstreckt sich von dem Auf-und-Ab-Rohrabschnitt (41) in Richtung des Scheinwerfers (31).

8. Das Spreiz-Sitz-Fahrzeug (1) gemäß Anspruch 2, **dadurch gekennzeichnet, dass** der erste Tragabschnitt (51) und der zweite Tragabschnitt (52) den Scheinwerfer (31) in Positionen tragen, die sich beidseitig außerhalb der Instrumenteneinheit (32) in Breitenrichtung des Fahrzeugs befinden.

9. Das Spreiz-Sitz-Fahrzeug (1) gemäß irgendeinem der Ansprüche 1 bis 8, **dadurch gekennzeichnet, dass** das erste Trägerteil (44) die Instrumenteneinheit (32) in einer Position in der Nähe eines Schwerpunkts (g2) der Instrumenteneinheit (32) trägt.

10. Das Spreiz-Sitz-Fahrzeug (1) gemäß irgendeinem der Ansprüche 1 bis 9, **dadurch gekennzeichnet, dass** die Instrumenteneinheit (32) in der Rückwärts-und-Vorwärts-Richtung des Fahrzeugs länger ist als in der Breitenrichtung des Fahrzeugs.

11. Das Spreiz-Sitz-Fahrzeug (1) gemäß irgendeinem der Ansprüche 1 bis 10,
**gekennzeichnet durch:**
ein Kombi-Brems-Kabel (81), das eine Vorderradbremse des Fahrzeugs und eine Hinterradbremse des Fahrzeugs miteinander verbindet; und
ein Halteelement (82), welches das Kombi-Brems-Kabel (81) hält, das Halteelement (82) ist an dem ersten Trägerteil (44) angeordnet.

## Revendications

1. Véhicule à enfourcher (1), comprenant :
un guidon (16) ;
un phare (31) disposé devant le guidon (16) en direction avant-arrière du véhicule ;
un carénage de guidon (33) recouvrant le guidon (16) et le phare (31) depuis l'avant et l'arrière en direction avant-arrière du véhicule ;
une première section de support (44) fixée au guidon (16), la première section de support (44) supportant le phare (31) ;
une deuxième section de support (45) fixée au guidon (16), la deuxième section de support (45) supportant le phare (31) sur un côté inférieur à la première section de support (44) en direction haut-bas du véhicule ; et
une unité de compteur (32) disposée derrière le phare (31) en direction avant-arrière du véhicule,
**caractérisé en ce que** la première section de support (44) supporte l'unité de compteur (32).

2. Véhicule à enfourcher (1) selon la revendication 1, **caractérisé en ce que** la première section de support (44) comprend
une première portion de support (51) supportant le phare (31), et
une deuxième portion de support (52) supportant le phare (31), la deuxième portion de support (52) étant alignée avec la première portion de support (51) en direction de la largeur du véhicule.

3. Véhicule à enfourcher (1) selon la revendication 2, **caractérisé en ce que** la première section de support (44) comprend en outre une troisième portion de support (53) supportant l'unité de compteur (32), et la troisième portion de support (53) est disposée entre la première portion de support (51) et la deuxième portion de support (52) en direction de la largeur du véhicule.

4. Véhicule à enfourcher (1) selon la revendication 2 ou 3, **caractérisé en ce que**
le phare (31) comprend une première protubérance (64) et une deuxième protubérance (65), la première protubérance (64) et la deuxième protubérance (65) faisant saillie vers le guidon (16),
la première portion de support (51) comprend un premier trou traversant (51a) et un premier corps élastique (46), le premier corps élastique (46) ayant une forme tubulaire, le premier corps élastique (46) étant disposé dans le premier trou traversant (51a), le premier corps élastique (46) provoquant l'insertion de la première protubérance (64), et
la deuxième portion de support (52) comprend un deuxième trou traversant (52a) et un deuxième corps élastique (47), le deuxième corps élastique (47) ayant une forme tubulaire, le deuxième corps élastique (47) étant disposé dans le deuxième trou traversant (52a), le deuxième corps élastique (47) provoquant l'insertion de la deuxième protubérance (65).

5. Véhicule à enfourcher (1) selon l'une quelconque des revendications 1 à 4, **caractérisé en ce que**
la première section de support (44) supporte le phare (31) dans une position identique ou située sur un côté supérieur au centre de gravité (g1) du phare (31) en direction haut-bas du véhicule, et
la deuxième section de support (45) supporte le phare (31) dans une position située sur un côté inférieur au centre de gravité (g1) du phare (31) en direction haut-bas du véhicule.

6. Véhicule à enfourcher (1) selon l'une quelconque des revendications 1 à 5, **caractérisé en ce que** la deuxième section de support (45) supporte le phare (31) depuis le dessous en direction haut-bas du véhicule.

7. Véhicule à enfourcher (1) selon l'une quelconque des revendications 1 à 6, **caractérisé en ce que** le guidon (16) comprend
une portion de tuyau de haut en bas (41) s'étendant en direction haut-bas du véhicule, et
une portion de tuyau en largeur (42, 43) s'étendant depuis un sommet de la portion de tuyau de haut en bas (41) en direction de la largeur du véhicule,
la première section de support (44) s'étend depuis la portion de tuyau en largeur (42, 43) vers le phare (31), et
la deuxième section de support (45) s'étend depuis la portion de tuyau de haut en bas (41) vers le phare (31) .

8. Véhicule à enfourcher (1) selon la revendication 2, **caractérisé en ce que** la première portion de support (51) et la deuxième portion de support (52) supportent le phare (31) dans des positions situées bilatéralement à l'extérieur de l'unité de compteur (32) en direction de la largeur du véhicule.

9. Véhicule à enfourcher (1) selon l'une quelconque des revendications 1 à 8, **caractérisé en ce que** la première section de support (44) supporte l'unité de compteur (32) dans une position proche du centre de gravité (g2) de l'unité de compteur (32).

10. Véhicule à enfourcher (1) selon l'une quelconque des revendications 1 à 9, **caractérisé en ce que** l'unité de compteur (32) est plus longue en direction avant-arrière du véhicule qu'en direction de la largeur du véhicule.

11. Véhicule à enfourcher (1) selon l'une quelconque des revendications 1 à 10, **caractérisé par :**
un câble de frein combiné (81) reliant un frein avant du véhicule à un frein arrière du véhicule ; et
un élément de maintien (82) maintenant le câble de frein combiné (81), l'élément de maintien (82) étant disposé sur la première section de support (44).
